# EUROPÄISCHE PATENTSCHRIFT

(11) **EP 1 018 794 B1**
(45) Veröffentlichungstag und Bekanntmachung des Hinweises auf die Patenterteilung: **20.07.2005**
(21) Anmeldenummer: 99125377.4
(22) Anmeldetag: 20.12.1999
(51) Int. Cl.: H02J 9/02

(54) **Umschaltweiche zur selbständigen Umschaltung von Notleuchten von Not- auf Netzbetrieb**
Changeover switch for automatic changeover of emergency lights from emergency to mains operation
Commutateur d'inversion pour une commutation automatique d'un éclairage de secours d'une alimentation de secours vers le secteur

(30) Priorität: 19.12.1998 DE 29822679 U
(43) Veröffentlichungstag der Anmeldung: 12.07.2000
(73) Patentinhaber: Berthold Kühn Verwaltungsgesellschaft mbH, 99819 Krauthausen-Eisenach (DE)
(72) Erfinder: Grau, Achim, 99817 Eisenach (DE)
(74) Vertreter: Schubert, Siegmar, Dipl.-Ing.

(56) Entgegenhaltungen:
- DE-A- 2 730 996
- GB-A- 1 462 916
- US-A- 5 202 608
- US-A- 5 365 145
- US-A- 5 814 971

## Beschreibung

Die Erfindung betrifft eine Umschaltweiche zur selbständigen Umschaltung von Notleuchten von Not- auf Netzbetrieb nach dem Oberbegriff des Anspruchs 1.

Derartige bekannte Umschaltweichen werden in baulichen Starkstromanlagen für Menschenansammlungen eingesetzt. Sie sind so ausgelegt, daß sie folgende Funktionen für Lampen mit erforderlichen Zündzeiten erfüllen:
- Selbsttätige verzögerte Rückschaltung
- Zeitliche Verzögerung der Umschaltvorgänge bei kurzzeitiger Netzunterbrechung (Netzwischer)
- Verzögerung der Umschaltung bis zu 85 % Unterspannung.

Damit werden jedoch weitere Anforderungen insbesondere nach EN 60924 und EN 60925 hinsichtlich möglicher Fehlerfälle und ausreichender Trennung von Netz- und Notversorgung nicht erfüllt. Mehr im einzelnen wird gefordert, daß eine Verbindung der Notleuchten mit der Notstromversorgung bei Ausfall der Netz- und Notspannung gewährleistet bleibt. Außerdem muß in kombinierten Notleuchten für zentrale Versorgung eine ausreichende Trennung zwischen Netz- und Notversorgung sichergestellt sein. Die verwendeten Relais sollen eine Potentialtrennung von größer als 3 mm ermöglichen. Deren Kontakte sollen zwangsgeführt sein.

Zum Stand der Technik gehört ferner ein Inverter für alternative Lastkreise einer Notbeleuchtungsanlage mit Fluoreszenzlampen, die eine Umschaltweiche mit einer Relaisanordnung gemäß dem Oberbegriff des Anspruchs 1 beinhaltet (US-A-5 814 971). Der Inverter soll dazu einen Lastkreis abtrennen und gleichzeitig eine Verbindung zwischen ihm und Lampen herstellen können. Eine Ausführungsform umfaßt drei Relais, deren Spulen in einem Ladestromkreis einer Batterie liegen und deren Umschaltkontakte normal offen sind, wenn bei vorhandener Netzspannung geladen wird, oder aber ansonsten normal geschlossen sind. Jedes Relais hat nur einen einfachen Umschaltkontakt. Mit je einem normal offenen Umschaltkontakt von zwei der drei Relais wird der Lastkreis mit Netzstrom versorgt. Bei Netzausfall wird der Lastkreis durch die Umschaltkontakte primärseitig von dem Netz getrennt und mit einem Ausgang des Inverters verbunden, der durch einen Transistor gesteuert aus der Batterie gespeist wird.

Zu der Vielzahl an sich bekannter Relais gehören auch Sicherheitsrelais mit vier Hauptkontakten, denen jeweils ein zwangsgeführter Hilfskontakt zugeordnet ist. Dabei ist die Kontaktart frei wählbar. Die Netzspannung beträgt 2500 Volt (Hans Sauer, Relais Lexikon, Hüthig Verlag, Heidelberg, 1985, insbesondere Seite 269).

Der Erfindung liegt die Aufgabe zugrunde, eine Umschaltweiche in technisch möglichst wenig aufwendiger Weise zu schaffen, die die obigen Anforderungen erfüllt.

Diese Aufgabe ist erfindungsgemäß durch ein zusätzliches Relais zu der üblichen Relaisanordnung einer Umschaltweiche gelöst, welches der Relaisanordnung nachgeschaltet ist und die in dem kennzeichnenden Teil des Anspruchs 1 angegebenen Merkmale aufweist bzw. geschaltet ist.

Das zur Trennung der Netz- und Notstromversorgung verwendete zusätzliche Relais, welches auch als Sicherheitsrelais bezeichnet werden kann, umfaßt einen Schaltsatz mit mehreren Einzelschaltern. Die Spule des Relais ist so angeordnet, daß diese bei Notstromversorgung durch ein anderes Relais der herkömmlichen Relaisanordnung in stromlosen Zustand ist, so daß im Fehlerfall die Notversorgung der Notleuchten erhalten bleibt. Die Energie für das nachgeschaltete Relais wird dem Netz entnommen, so daß nur bei vorhandenem Netz umschalten kann. Die erforderliche Zwangsführung der Kontakte des zusätzlichen Relais kann durch dessen Konstruktion verwirklicht sein.

Mehr im einzelnen weist das zusätzliche Relais die Merkmale auf, daß es ein monostabiles Relais (RT3) mit doppelpoligen Umschaltkontakten (RT3-A bis RT3-I) ist, in dem die Umschaltkontakte (RT3-A bis RT3-I) zwangsgeführt sind. Die Umschaltkontakte (RT3-A bis RT3-I) sind so angeordnet, daß eine Notstromversorgung zwischen der Notstromquelle (Eingang 1) und den Notleuchten (Ausgang) bei Ausfall des Netzes (Eingang 2) und Notstromquelle (Eingang 1) erhalten bleibt, wozu das Relais monostabil ist, und daß stets eine Potentialtrennung zwischen Notstromquelle (Eingang 1) und Netz (Eingang 2) größer als 3 mm vorliegt.

Erfindungsgemäß wird das zusätzliche Relais als Umschaltrelais mit einer gegenüber einem einfachen Umschaltrelais verdoppelten Anzahl Umschaltkontakten eingesetzt, wobei jeder Umschaltkontakt je zwei Öffner in Reihe und je zwei Schließer in Reihe umfaßt. Infolge dieser Reihenschaltung braucht die konstruktionsgegebene Potentialtrennung bei jedem Öffner oder Schließer nur mindestens 1,5 mm zu betragen. Die Auswahlmöglichkeit geeigneter monostabiler Relais ist also vergrößert.

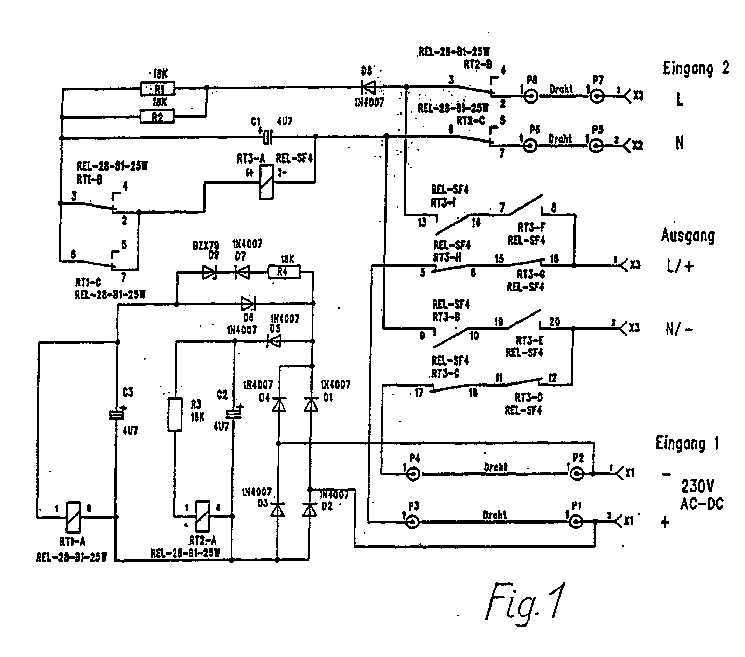

Weitere Einzelheiten und Vorteile der erfindungsgemäßen Umschaltweiche ergeben sich aus Fig. 1 der Zeichnung, in der ein Schaltbild dargestellt ist, sowie aus der beigefügten Schaltlogik.

In der Schaltungsanordnung der Umschaltweiche ist ein Eingang 1 zum Anschluß an eine Notstromquelle vorgesehen und ein Eingang 2 zum Netzanschluß. Notleuchten, insbesondere kombinierten Notleuchten, sind an den Ausgang angeschlossen.

Die Schaltungsanordnung umfaßt in herkömmlicher Weise zwei Relais, deren Spulen mit RT1-A und RT2-A bezeichnet sind. Die Kontakte - Umschaltkontakte - dieser Relais sind in üblicher Bezeichnungsweise den beiden Spulen in Fig. 1 zugeordnet. In der beigefügten Schaltlogik, aus der sich die logische Verknüpfung der Zustände an den Eingängen 1 und 2 zu dem Ausgang ergibt, ist der Schaltsatz der Kontakte der zu dem Relais RT1 -A gehört, mit S₁ bezeichnet und der Schaltsatz der Kontakte zu dem Relais RT2-A mit S₂. Zu dem zusätzlichen Relais RT3-A gehört der Schaltsatz S₃ in der Schaltlogik. Die zu S₃ gehörigen Umschaltkontakte RT3-A bis RT3-I liegen in der aus Fig. 1 ersichtlichen Weise an dem Ausgang der Umschaltweiche.

Aus der Schaltungsanordnung gemäß Fig. 1 sowie aus der Schaltlogik ergibt sich, wie im einzelnen durch Nachschaltung des Relais RT3 mit dem Schaltsatz S₃ die Trennung der Netz- und Notstromversorgung gewährleistet ist. Außerdem ist aus der Schaltlogik die Funktion der Umschaltweiche mit dem zusätzlichen Relais RT3 zu ersehen, daß die Spule des Relais bei Notstromversorgung durch das Relais RT1 mit dem Schaltsatz S₁ im stromlosen Zusatz ist, so daß im Fehlerfall die Notversorgung der Notleuchten erhalten bleibt. Wie weiter aus Fig. 1 ersichtlich, wird die Energie für das nachgeschaltete Relais RT3 dem Netz entnommen, so daß es nur bei vorhandenem Netz umschalten kann. Die Zwangsführung der Kontakte des Schaltsatzes S₃ ist durch die Konstruktion des zusätzlichen Relais RT3 gegeben.

Aus der Schaltlogik ergibt sich weiter, daß bei vorhandener Notversorgung sowie Netz- und Notversorgung die kombinierten Notleuchten am Ausgang in Notbetrieb betrieben werden. Nur bei allein vorhandenem Netz am Eingang 2 erfolgt eine Umschaltung auf Netzbetrieb. Sollte eines der Relais in der Schaltungsanordnung defekt sein, z.B. durch Schluß der Spule, Kontaktverschweißung oder gebrochene Kontaktfeder, so stellt sich immer der Notbetrieb ein.

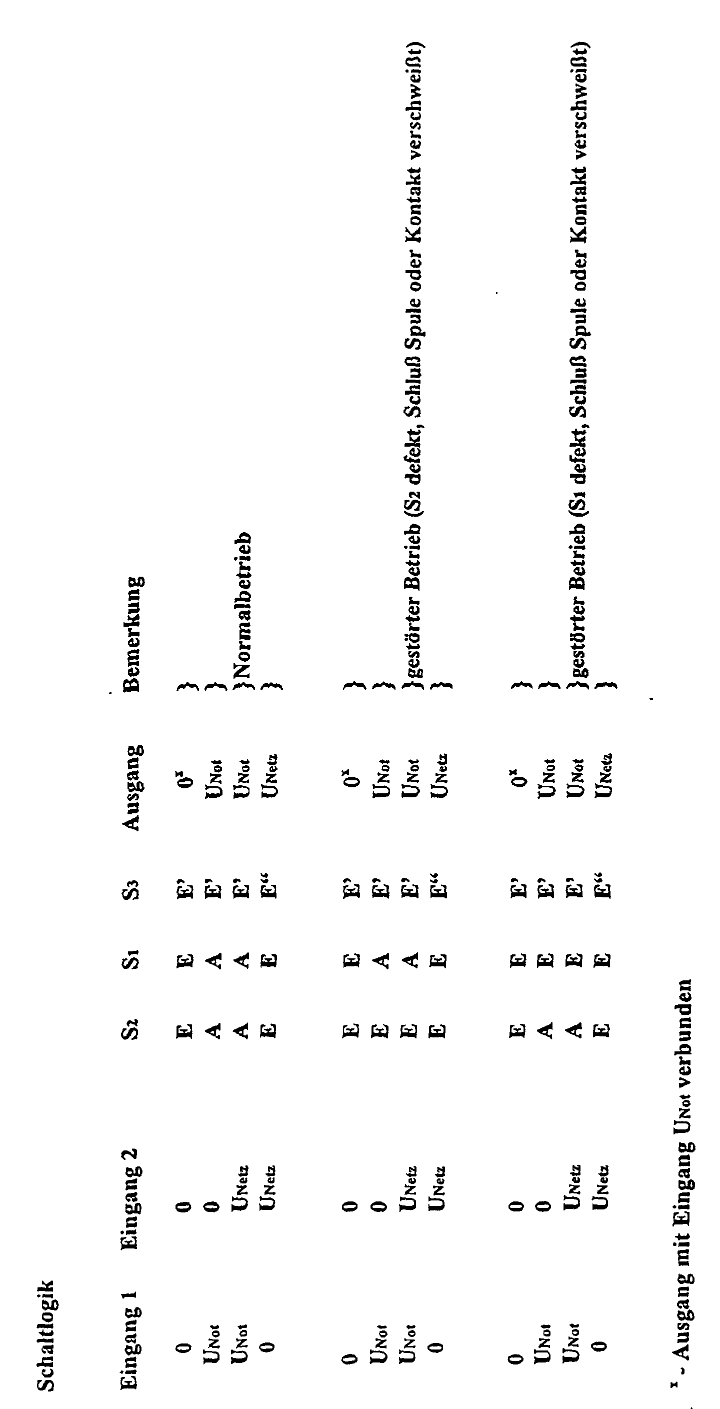

## Patentansprüche

1. Umschaltweiche zur selbständigen Umschaltung von Notleuchten von Not- auf Netzbetrieb, mit einer Relaisanordnung, über welche die Notleuchten mit einer Notstromquelle oder einem Netz verbindbar sind,
**dadurch gekennzeichnet,**
**daß** zur ausreichenden Trennung von Netz- und Notversorgung der Relaisanordnung ein monostabiles Relais (RT3) mit doppelpoligen Umschaltkontakten (RT3-A bis RT3-I) nachgeschaltet ist, in dem die Umschaltkontakte (RT3-A bis RT3-I) zwangsgeführt sind, und daß je ein Umschaltkontakt des nachgeschalteten Relais (RT3) durch je zwei Öffner in Reihe (RT3-I, RT3-F bzw. RT3-B, RT3-E) und zwei Schließer in Reihe (RT3-H, RT3-G bzw. RT3-C, RT3-D) realisiert ist, so daß eine konstruktionsgemäße Kontakttrennung jedes einzelnen Kontakts von mindestens 1,5 mm ausreicht.

## Claims

1. Changeover switch for automatic changeover of emergency lights from emergency to mains operation comprising a relay system via which the emergency lights can be connected with an emergency power source or a supply mains,
**characterized in**
**that** in order to sufficiently separate mains and emergency supply of said relay system, said system is followed by a monostable relay (RT3) including bipolar changeover contacts (RT3-A through RT3-I) in which said changeover contacts (RT3-A through RT3-I) are forcedly guided and that one changeover contact each of said follower relay (RT3) is effected by two opening contacts in series each (RT3-I, RT3-F and RT3-B, RT3-E, respectively) and two closing contacts in series (RT3-H, RT3-G and RT3-C, RT3-D, respectively) so that structural contact separation of each individual contact of at least 1.5 mm is sufficient.

## Revendications

1. Commutateur d'inversion pour la commutation automatique d'éclairages de secours d'une alimentation de secours sur l'alimentation par le secteur, comprenant un dispositif de relais, par lequel les éclairages de secours peuvent être reliés à une source de secours ou un réseau,
**caractérisé en ce que**,
pour la séparation suffisante de l'alimentation par le secteur et l'alimentation de secours, un relais (RT3) monostable avec des contacts d'inversion (RT3-A à RT3-I) à double pôle, dans lequel les contacts d'inversion (RT3-A à RT3-I) sont guidés de façon forcée, est monté en aval du dispositif de relais et **en ce que** à chaque fois un contact d'inversion du relais (RT3) monté en aval est réalisé par respectivement deux contacts à ouverture en série (RT3-I; RY3-F ou RT3-B, RT3-E) et deux contacts à fermeture en série (RT3-H, RT3-G ou RT3-C, RT3-D), de sorte qu'une séparation de contact conforme à la construction de chaque contact individuel d'au moins 1,5 mm est suffisante.
